# EUROPEAN PATENT SPECIFICATION

(11) **EP 1 764 503 B1**
(45) Date of publication and mention of the grant of the patent: **26.12.2012**
(21) Application number: 06381023.8
(22) Date of filing: 23.05.2006
(51) Int. Cl.: F03D 1/02, F03D 1/06

(54) **Wind turbine**
Windenergieanlage
Éolienne

(30) Priority: 14.09.2005 ES 200502238
(43) Date of publication of application: 21.03.2007
(73) Proprietor: Marrero O'Shanahan, Pedro M., 35011 Las Palmas de Gran Canaria (ES)
(72) Inventor: Marrero O'Shanahan, Pedro M., 35011 Las Palmas de Gran Canaria (ES)
(74) Representative: Elzaburu Marquez, Alberto

(56) References cited:
- WO-A-97/34083
- DE-U1- 20 203 119
- GB-A- 250 636
- RO-B1- 103 042

## Description

### FIELD OF THE INVENTION

The present invention relates to wind turbines intended to trap the energy of wind, or any other fluid, and convert it to electric, mechanic or any other type of energy and more particularly to a rotor sweeping a section in a circular ring shape.

### BACKGROUND OF THE INVENTION

Spanish patent ES 2160078 of the applicant of the present invention describes a wind turbine provided with a wind-channeling pipe with a narrowing in its central part, with a section in a circular ring shape in which a rotor blade configured to act upon a sweeping area with a section in a circular ring shape would be placed.

This narrowing is delimited by an outer pipe and an inner body formed by a central cylindrical part and two conical end parts. The rotor is placed in the central area where the accelerated wind would arrive when it contacts the conical part of the inner body.

The mentioned inner body, in addition to providing a means for achieving the narrowing of the pipe, provides the space necessary for housing the necessary means for generating electric energy, and as the case may be, for controlling the whole system, and particularly, the orientation and the movement of the wind-channeling pipe assembly.

The present invention is meant to provide a new rotor for said wind turbine improving performance of the blades rotor mentioned in said patent.

### SUMMARY OF THE INVENTION

The wind turbine of the present invention, comprising the features of claim 1, has a rotor which sweeps a sectional area in a circular ring shape delimited by an outer wind-channeling pipe and an inner body housing the generator and the main shaft connecting it to the rotor and comprises a plurality of rotating elements around several shafts arranged radially in said area and coupled to the main shaft so as to impart to the latter the turning torque of the rotor produced when the force of the wind acts upon the rotor.

The rotation of the rotor is produced due to the Magnus effect. The wind passes longitudinally through the sectional area in a circular ring shape and crosses the rotor, perpendicularly to the plane defined by the radial shafts of the mentioned elements and, since the rotating elements are rotating, an increase in pressure is produced, by the Magnus effect, in one of its sides and a decrease in pressure in the opposite side, in the plane of the rotor itself, the rotation of the rotor generating the difference in pressure very efficiently.

WO 97/34083 discloses different embodiments of wind and hydraulic turbines that make use of the Magnus effect. In certain embodiments, the turbines comprise an outer tube, an inner tube and rotating elements in between.

DE 202 03 119 U1 discloses wind turbines comprising an inner body housing the main shaft, to which standard blades are radially attached for sweeping a circular area that is delimited by an outer tube.

RO 103042 discloses wind turbines comprising an inner body that houses the main shaft and the generator and an outer tube that delimits the sweeping area of the rotor. This sweeping area is swept by a plurality of elements that rotate along a longitudinal axis thereof and are directly attached to the shaft, thus imparting the turning torque to the rotor.

Other features and advantages of the present invention will be disclosed in the detailed description with an illustrating, and in no sense limiting, embodiment of its objects with respect to the attached drawings.

### DESCRIPTION OF THE DRAWINGS

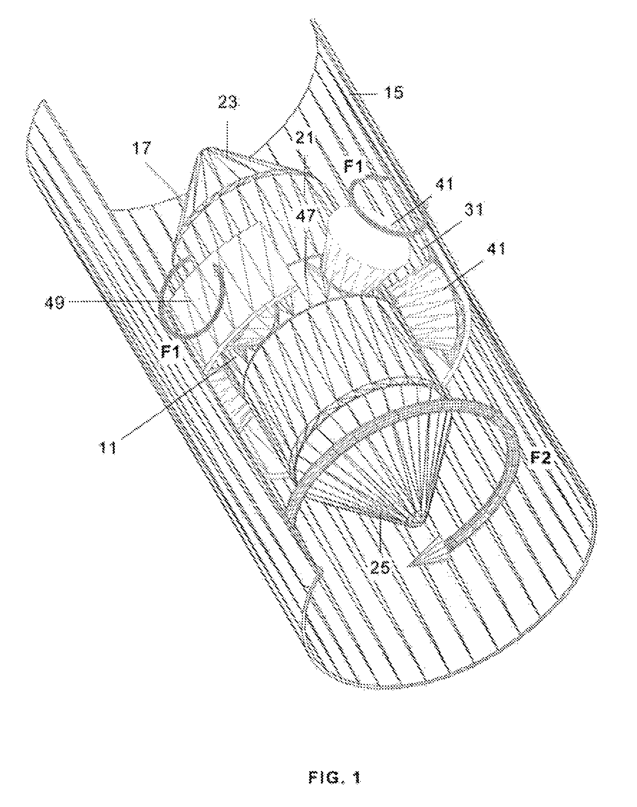

Figure 1 is a schematic perspective view of a wind turbine with a rotor according to the invention.

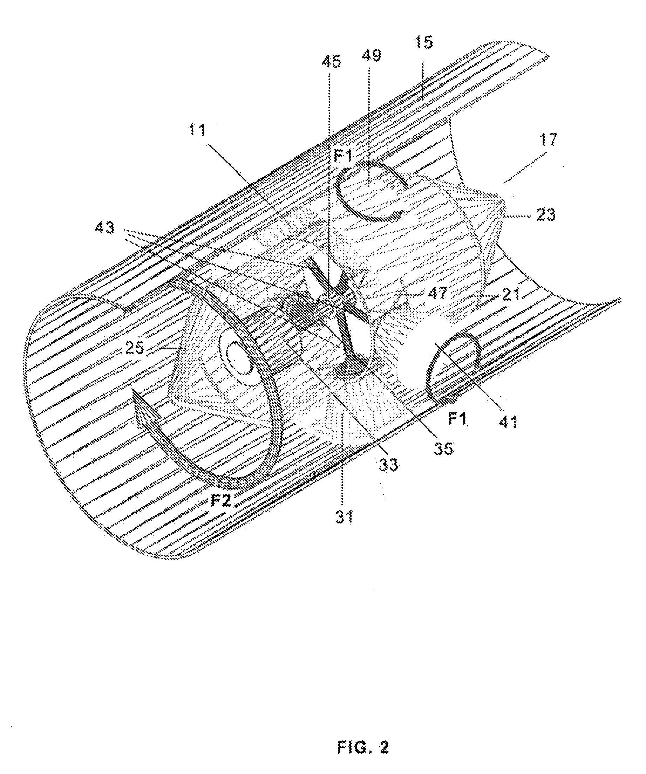

Figure 2 is a schematic perspective view of a wind turbine with a rotor according to the invention showing the connection of the shafts of the rotating elements to the main shaft of the wind turbine.

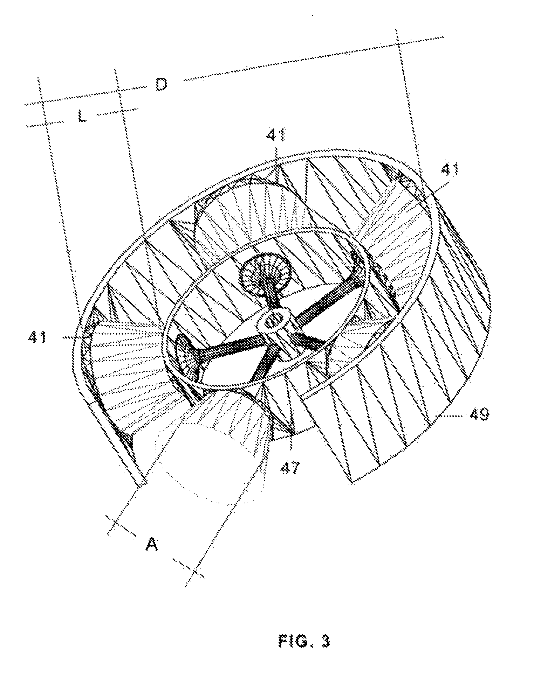

Figure 3 is a schematic perspective view of the rotor, separated from the wind turbine.

### DETAILED DESCRIPTION OF THE INVENTION

The wind turbine to which the rotor 11 object of the present invention is applied comprises, in a preferred embodiment of the invention, an outer wind-channeling pipe 15 and an inner body 17, formed by a central cylindrical part 21 and two conical outer parts 23, 25, delimiting a sectional area 31 in a circular ring shape wherein the rotor 11 is located, supported by a tower that is not shown.

Body 21 houses in its inside the necessary means for generating electric energy of which only the generator 33 and the main shaft 35 connecting it to the rotor 11 have been shown.

Rotor 11 comprises a plurality of rotating elements 41 in the sectional area 31 in a circular ring shape, supported by radial shafts 43 joined to the main shaft 35 through a coupling device 45. The rotor also comprises a rotating ring 47, integral with the radial shafts 43, which can form part of the cover of the central part 21 of the inner body 17 and a rotating ring 49, integral with the radial shafts 43, located inside the outer pipe 15.

The rotating elements 41 can have a frustoconical shape as the one shown in the drawings and can also have a cylindrical or polyhedral shape of a straight generatrix or the like.

When these elements 41 are rotated in the direction indicated by the arrows F1 on their shafts 43, which are radii of 11, they generate, by a difference in pressure, a force perpendicular to said shafts that makes the rotor 11 rotate in the direction indicated by the arrow F2 and, in turn, the main shaft 35. The rotation of the elements 41 can be achieved by using a small electric motor connected to an external source of energy or another equivalent device or by mechanical means.

The generated difference in pressure, and therefore the force perpendicular to said shafts, increases with the speed of the wind V which passes through the rotor 11; it also increases with the rotation speed of the rotating elements 41. This allows, by acting on the speed of the rotation of the rotating elements 41, obtaining:
a) A high electric generation level for low speeds of the wind V, much higher than the electric generation which would be obtained with a traditional rotor and a significant level with speeds of wind V unacceptable for a traditional rotor.
b) A rapid increase in the electricity generated, by increasing the speed of the wind V, much higher than the one that would be obtained with a traditional rotor.
c) Achieving the maximum generating capacity of the electric generator with speeds of wind V much lower than the ones necessary with a traditional rotor.
d) Once the maximum generating capacity has been achieved, easily regulating the possible over-generation due to increases in the speed of the wind V, so that the electric generator is not damaged.
e) Stopping the rotation of the rotor in situations requiring it, without introducing undesirable stress into the system. This is achieved in a simple manner by stopping the rotation of the rotating elements 41, and even reversing the direction of their rotation in the necessary cases.

The rotating elements 41 are preferably hollow in their inside and are provided with enclosures in their ends contiguous to the outer pipe 15 and to the inner body 17. Due to their small weight, rotation of the rotating elements 41 requires very low energy consumption since they are hollow.

The number and dimensions of the rotating elements 41 of the rotor depend on the power expected for the wind turbine considering that the number of rotating elements 41 of the rotor 11 is comprised between 3 and 10, that the distance between them is analogous to is average width A, and that the ratio between the length L and the average width A of the elements 41 is comprised between L/A=0.3 and L/A=3 and that the ratio between the diameter D of the rotor 11 and the length L of the elements is comprised between D/L=40 and D/L=5.

With respect to the embodiment of the invention which has just been described, it is evident that modifications comprised within the scope of the same can be introduced into it, the invention not being considered limited to said embodiments but to the content of the following claims:

## Claims

1. A wind turbine comprising an outer wind-channeling pipe (15), an inner body (17), a generator (33), a main shaft (35) and a rotor (11) for sweeping a sectional area (31) in a circular rang shape delimited by the outer wind-channeling pipe (15) and the inner body (17) housing the generator (33) and the main shaft (35) connecting it to the rotor (11), wherein in the rotor (11) in comprises a plurality of rotating elements (41) in said area (31) around several shafts (43) arranged radially and coupled to the main shaft (35) so as to impart to the latter the turning torque of the rotor (11) produced when the force of the wind acts upon it,
that the rotor (11) also comprises an outer ring (49), next to the outer pipe (15), and an inner ring (47), next to the inner body (17) or forming part of its cover, integral with the radial shafts (43) and delimiting the space of the rotor (11) inside which the rotating elements (41) are located.

2. A wind turbine according to claim 1, **characterized in that** the number of rotating elements (41) is comprised between 3 and 10.

3. A wind turbine according to claim 1, **characterized in that** the ratio between the length L and the average width A of the rotating elements (41) is comprised between UA=0.3 and UA=3.

4. A wind turbine according to claim 1, **characterized in that** the ratio between the diameter D of the rotor (11) and the length L of the rotating elements (41) is comprised between D/L=40 and D/L=5.

5. A wind turbine according to claim 1, **characterized in that** said rotating elements (41) have a frustoconical shape.

6. A wind turbine according to claim1, **characterized in that** said rotating elements (41) have a cylindrical shape.

## Patentansprüche

1. Eine Windturbine bestehend aus einem äußeren, Wind leitenden Rohr (15), einem inneren Gehäuse (17), einem Generator (33), einer Hauptachse (35) und einem Rotor (11) zum Fegen einer Querschnittsfläche (31) in einer runden Ringform begrenzt durch das äußere Wind leitende Rohr (15) und dem inneren Gehäuse (17), das den Generator (33) und die Hauptachse enthält, die es mit dem Rotor (11) verbindet, wobei der Rotor (11) eine Vielzahl rotierender Elemente (41) in besagtem Bereich (31) um mehrere, radial angeordnete und an die Hauptachse (35) gekuppelte Achsen (43) enthält, damit auf Letztere das Drehmoment des Rotors (11) einwirkt, das erzeugt wird, wenn die Windkraft auf sie einwirkt, **dadurch gekennzeichnet, dass** der Rotor (11) einen äußeren Ring (49) neben dem äußeren Rohr (15) umfasst, und einen inneren Ring (47) neben dem inneren Gehäuse (17) oder Teil seiner Abdeckung bildend, Bestandteil der radialen Achsen (43), und den Raum des Rotors (11) begrenzend, in dem sich die rotierenden Elemente (41) befinden.

2. Eine Windturbine gemäß Anspruch 1, **dadurch gekennzeichnet, dass** die Zahl der rotierenden Elemente (41) zwischen 3 und 10 beträgt.

3. Eine Windturbine gemäß Anspruch 1, **dadurch gekennzeichnet, dass** das Verhältnis zwischen der Länge L und der Durchschnittsbreite A der rotierenden Elemente (41) zwischen L/A=0,3 und L/A=3 liegt.

4. Eine Windturbine gemäß Anspruch 1, **dadurch gekennzeichnet, dass** das Verhältnis zwischen dem Durchmesser D des Rotors (11) und der Länge L der rotierenden Elemente (41) zwischen D/L=40 und D/L=5 liegt.

5. Eine Windturbine gemäß Anspruch 1, **dadurch gekennzeichnet, dass** die rotierenden Elemente (41) eine kegelstumpfförmige Form besitzen.

6. Eine Windturbine gemäß Anspruch 1, **dadurch gekennzeichnet, dass** die rotierenden Elemente (41) eine zylindrische Form besitzen.

## Revendications

1. Un aérogénérateur composé d'un tuyau extérieur d'acheminement du vent (15), un corps interne (17), un générateur (33), un arbre principal (35) et un rotor (11) servant au balayage d'une section (31) dans un anneau circulaire délimité par le tuyau extérieur d'acheminement du vent (15) et par le corps interne (17) abritant le générateur (33) et l'arbre principal (35) qui le relie au rotor (11), lequel rotor (11) comprend un grand nombre d'éléments rotatifs (41) dans ladite section (31) situés autour de plusieurs arbres (43) et disposés de façon axiale et couplés à l'arbre principal (35) de manière à transmettre à ce dernier le couple de rotation du rotor (11) qui se produit lorsque la force du vent s'applique dessus, **caractérisé par le fait que** le rotor (11) comprend également un anneau externe (49), situé à proximité du tuyau extérieur (15), et un anneau interne (47), situé à côté du corps interne (17) ou faisant partie de son couvercle intégré avec les arbres axiaux (43) et délimitant l'espace du rotor (11) dans lequel les éléments rotatifs (41) sont logés.

2. Un aérogénérateur conformément à la revendication 1 **caractérisé par** un nombre d'éléments rotatifs (41) compris entre 3 et 10.

3. Un aérogénérateur conformément à la revendication 1 **caractérisé par le fait que** le rapport entre la longueur L et la largeur moyenne A des éléments rotatifs (41) est compris entre L/A = 0,3 et L/A = 3.

4. Un aérogénérateur conformément à la revendication 1 **caractérisé par le fait que** le rapport entre le diamètre D du rotor (11) et la longueur (L) des éléments rotatifs (41) est compris entre D/L = 40 et D/L = 5.

5. Un aérogénérateur conformément à la revendication 1 **caractérisé par le fait que** lesdits éléments rotatifs (41) ont une forme tronconique.

6. Un aérogénérateur conformément à la revendication 1 **caractérisé par le fait que** lesdits éléments rotatifs (41) ont une forme cylindrique.
